(19) Europäisches Patentamt
European Patent Office
Office européen des brevets

(11) EP 0 726 632 B1

(12) **EUROPEAN PATENT SPECIFICATION**

(45) Date of publication and mention
of the grant of the patent:
**25.10.2000 Bulletin 2000/43**

(51) Int Cl.⁷: **H02H 6/00**, B60L 3/00

(21) Application number: **96101754.8**

(22) Date of filing: **07.02.1996**

(54) **Lift truck with internal temperature monitor and system**

Flurförderfahrzeug mit interner Temperaturüberwachung

Chariot élévateur avec dispostif de surveillance de température interne

(84) Designated Contracting States:
**DE FR GB IT**

(30) Priority: **10.02.1995 US 386731**

(43) Date of publication of application:
**14.08.1996 Bulletin 1996/33**

(73) Proprietor: **The Raymond Corporation
Greene, New York 13778-0130 (US)**

(72) Inventors:
• **McCabe, Paul P.
Greene, New York 13378 (US)**

• **Wild, Arthur
Mentor, Ohio 44060 (US)**

(74) Representative: **Schmidt, Steffen J., Dipl.-Ing.
Wuesthoff & Wuesthoff,
Patent- und Rechtsanwälte,
Schweigerstrasse 2
81541 München (DE)**

(56) References cited:
**GB-A- 2 075 291       GB-A- 2 151 862
US-A- 5 039 924**

## Description

## BACKGROUND

The present invention relates to lift truck motor temperature controls and, more particularly, to motor control systems without thermal sensors.

The reliability of the electric DC motors and their power amplifier circuits is greatly reduced by thermal stresses. Typically DC motors are protected by thermal switches which shut off power to the power amplifier during over-temperature conditions. This is often unacceptable in industrial truck applications since the operator is left with an inoperable truck. Accordingly, many systems have been equipped with temperature sensors to sense when a temperature limit is being approached and thereby reduce the speed of the truck before exceeding the temperature limit that shuts off power.

Prior art methods and systems have relied upon imbedded temperature sensors such as thermocouples embedded in the brushes of the DC motor or thermistors in field coils or in the motor frame or bimetallic switches in a field coil or motor frame. Still another method has been to measure the resistance of the motor with the current to the motor turned off and the connecting wires removed.

Such prior art methods have several disadvantages. For example, thermocouples imbedded in the brushes have to be specially modified and held in place with epoxy. Thermocouples require additional circuitry to measure the voltage drop across the thermocouple junction. There is also an additional cost to install thermocouples and brushes. Moreover, in an industrial environment, it has been found that thermocouples are often unsuitable. When the brush with the thermocouple wears out, it is common not replace it. Thermistors, like thermocouples, have similar problems. Thermistors also are embedded in field coils or the motor frame and also require additional circuitry. Moreover, a thermistor can fail or be defeated in the control circuits by operators. Bimetallic switches are relatively simple and inexpensive devices. However, bimetallic switches can also be disconnected. Also, such switches can fail and their failure may not be detected.

Document GB-A-2075291 discloses a method of determining the winding temperature of an asynchronous motor, in which the prevailing motor resistance is calculated on the basis of the voltage amplitude impressed on the motor and the current flowing in the input lines of the motor. Therefor the phase angle between the voltage and the current and the slip derived from overtones in the motor current are calculated as well. With these values a calculator unit can calculate the equivalent resistance of the motor and a corresponding temperature value of the winding. In this monitoring and calculating system it is necessary that the slip value really is the correct one and that the motor current does not exceed the rated current by more than about 50%.

Because of these restrictions the operating conditions of the motor have to be static during the short time of monitoring the data.

Accordingly, there has been a long felt need for a lift truck with a temperature measuring apparatus and method that would not require additional circuitry, that would accurately measure the temperature of the motor winding while the truck is in operation and one that could not be defeated by operators.

## SUMMARY

The invention provides an apparatus for continously measuring the temperature of a DC motor in a lift truck according to claim 1. The motor has an armature, armature winding, and a field winding. The windings of the armature in the field are independently controlled. An armature controller applies a continuously varying voltage and continuously varying current to the armature winding. A field controller applies a continuously varying voltage and a continuously varying current to the field winding. A field voltage monitor circuit is coupled to the field for measuring voltage in the field while the field is supplied with current. The field voltage monitor circuit is independent of the applied field voltage. Accordingly, the monitor circuit works during the application of voltage to the field. The field voltage monitor circuit monitors the instantaneous field voltage in the field winding and generates a signal representative of the instantaneous field voltage. Simultaneously, a field current monitor circuit generates a signal representative of the instantaneous field current. The field current monitor circuit is coupled to the field for operating when the field is excited. The field current monitor circuit is also independent of the applied field current and is connected to the field winding for monitoring the instantaneous field current in the field simultaneously with the monitoring of the instantaneous field voltage by the field voltage monitor circuit.

The instantaneous field current and instantaneous field voltage signals are supplied to a microprocessor. The microprocessor generates a resistance signal in accordance with the instantaneous field current signal and the instantaneous field voltage signal. The resistance signal is compared to stored data signals that are representative of the temperature/resistance coefficient of the field windings. The microprocessor thus generates a temperature signal representative of the instantaneous temperature of the field windings. In this manner, the field winding temperature is measured directly in proportion to its resistance for a given applied instantaneous field current and instantaneous field voltage.

In order to achieve this result, the invention preferably provides a differential amplifier connected across the field winding for measuring the instantaneous voltage difference across the field winding. The differential amplifier has a low pass filter on it's input. Current is measured using a voltage divider with a precision resistor that generates a voltage signal proportional to the instantaneous field current.

Accordingly, with the invention, it is not necessary to either slow down or stop the truck or run the truck at a constant speed in order to measure the instantaneous field current in instantaneous field voltage.

## DRAWINGS

Figure 1 is a perspective view of a lift truck;

Figures 2a and 2b are schematic diagrams of the motor control circuit for a drive motor of the lift truck of Figure 1;

Figure 3 is a schematic of the current monitor circuit;

Figure 4 is a schematic of the voltage monitor circuit;

Figure 5 is a schematic of the motor controller microprocessor based control system.

## DESCRIPTION OF THE PREFERRED EMBODIMENT

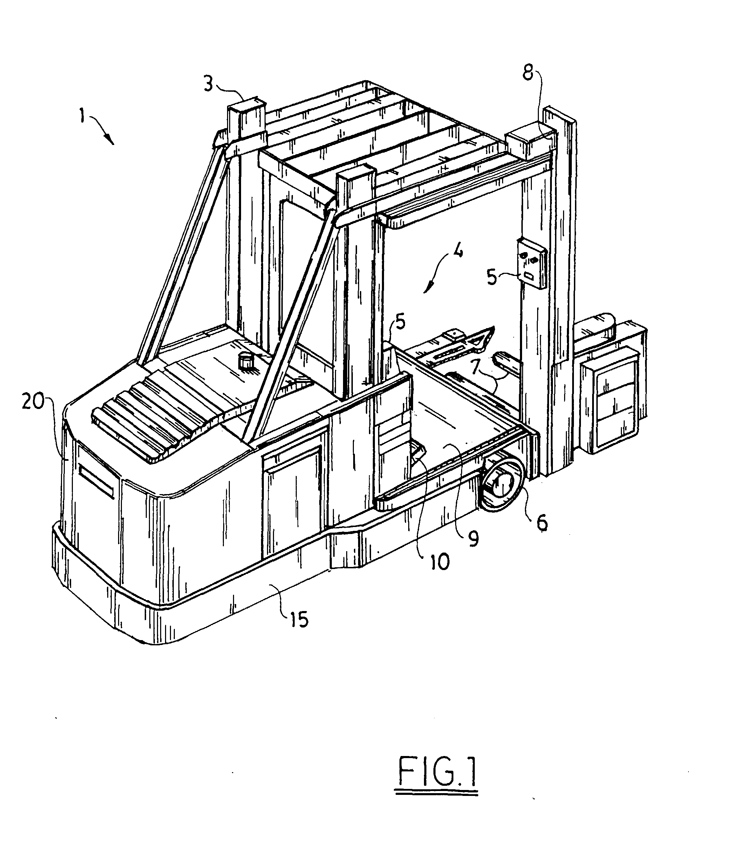

Referring to Figure 1, there is shown a perspective view of a material handling vehicle 1, the preferred embodiment being referred to as a lift truck. Vehicle 1 comprises a tractor frame 15 to which are mounted the main operating components of the vehicle 1 including a main telescoping mast 3, an elevating platform 9 connected to the mast 3, an operator control station 4 with a dead man's peddle 10, suitable displays 5, two non-steerable wheels 6, fork 7, and an auxiliary mast 8. A steering and drive system 20 is disposed in the rear of the vehicle 1 operatively connected to tractor frame 15 beneath one or more traction motors (not shown).

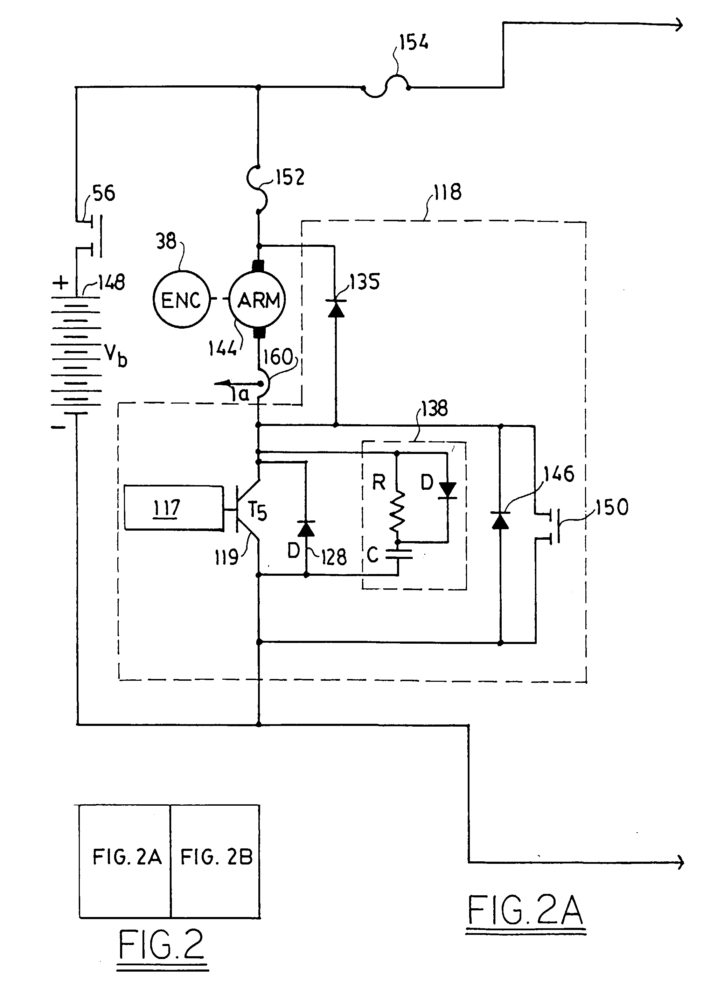

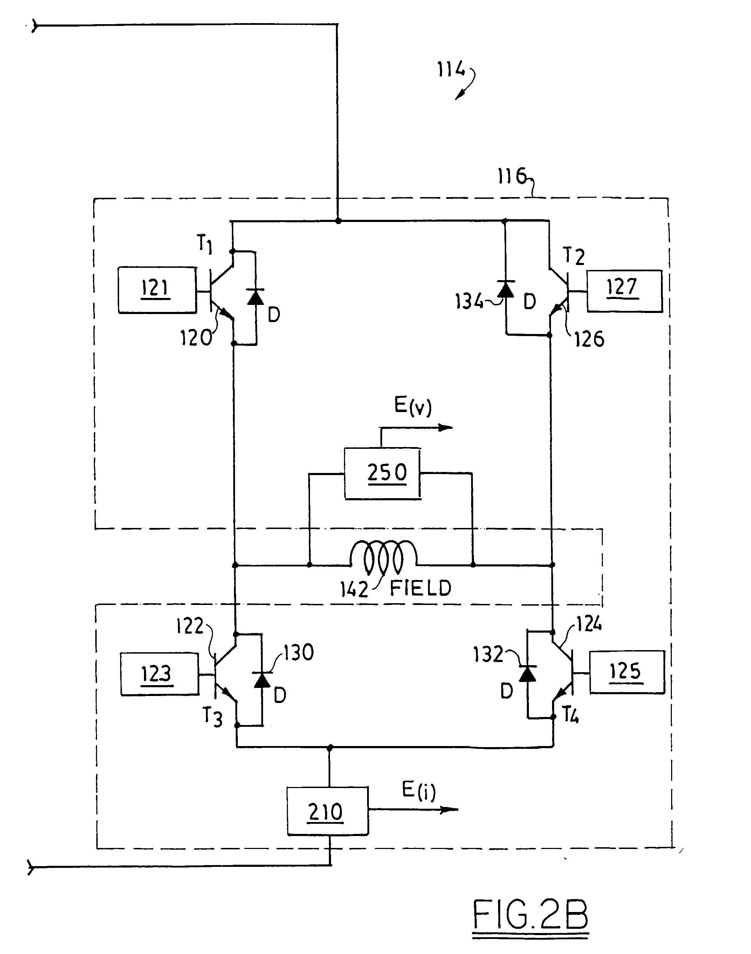

Referring to Figures 2a and 2b, there is generally shown a schematic diagram of one of the DC motors control circuits shown generally as reference number 114 which provides independent control of a series or shunt wound DC motor by independently controlling its armature winding 144 and field winding 142. A load (not shown) is driven by the armature 144.

The motor control circuit 114 has a chopper circuit 118 which controls armature winding 144. An H-bridge circuit 116 controls field winding 142. Two pairs of transistors 120, 122, and 124, 126 are connected to field winding 142 as shown. Power supplied to motor controlled circuit 114 by a DC battery 148. A main power contactor 56 is connected to battery 148 and chopper circuit 118 and H-bridge circuit 116. Main contactor 56 enables system shut down should any system element fail.

A chopper circuit fuse 152 is connected between the main contactor 56 and chopper circuit 118 to eliminate excessive current to chopper circuit 118. A H-bridge circuit fuse 154 is connected between main contractor 156 and H-bridge circuit 116 to eliminate excessive current there to.

Power regulation through armature winding 144 and field winding 142 is achieved through transistors 119 (in chopper circuit 118) and transistors 120, 122, 124, and 126 (in H-bridge circuit 116). Control of transistors 119, 120, 122, 124, and 126 is achieved through driving circuits 117, 121, 123, 125, and 127 respectively. Motor rotation direction is dictated by the field winding 142 orientation with respect to the armature winding 144. Field winding 142 orientation is controlled by transistor pairs 122, 126, and 120, and 124.

The on-off ratio of transistors 119, 120, 122, 124, and 126 results in an average applied terminal voltage to armature winding 144 and field winding 142, respectively. As such, totally independent and fully variable control of armature winding 144 and field winding 142 is achieved.

Freewheeling diodes 128, 129, 130, 132 and 134 provide a path for current upon turn-off of transistors 119, 120, 122, 124 and 126 respectively. Another freewheeling diode 135 is provided across armature 124, also to provide a current path when chopper circuit transistor 119 is turned off.

A regeneration diode 146 connected across transistor 119 provides recirculation of load current back to battery 148 during part of the motor deceleration cycle. A bypass contactor 150 connected across transistor 119 eliminates the power loss in transistor 119 during sustained high speed travel.

As shown in Figure 2b, a field current monitoring circuit 210 is coupled to the field winding 142. Field current monitoring circuit 210 generates an output signal E(i) which is a signal proportional to the instantaneous current in the field winding 142. A field voltage monitoring circuit 250 is also coupled to the field winding 142 for generating an output signal E(v) which is proportional to the instantaneous voltage differential across the field windings 142.

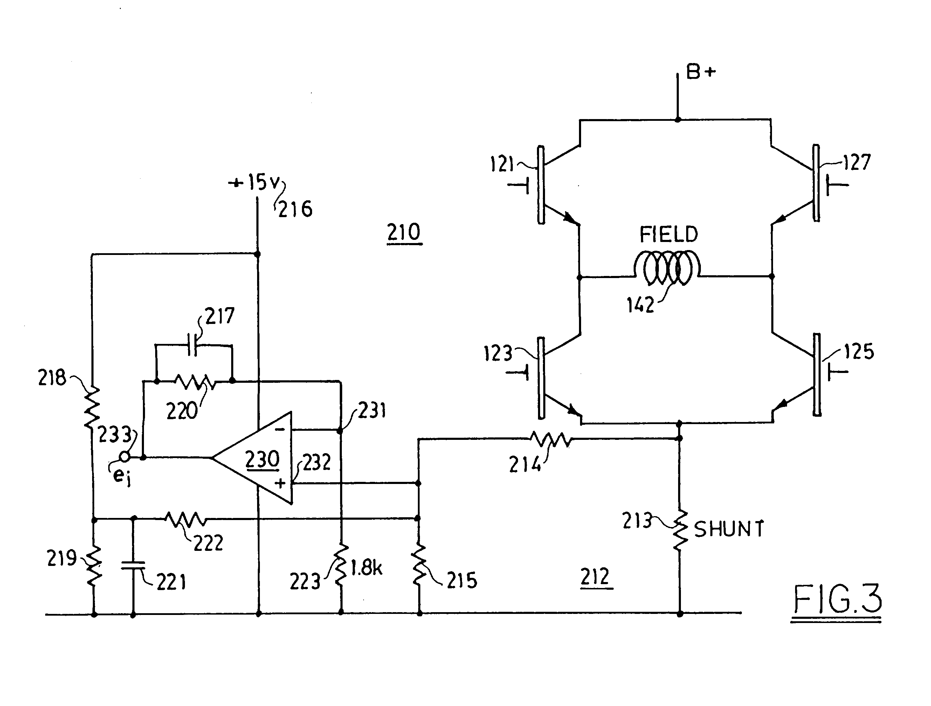

The field current monitoring circuit 210 is shown in greater detail in Figure 3. The current out of the field winding 142 passes through a precision shunt resistor 213. An amplifier 230 is coupled between a reference voltage 216 and ground. One input 232 is coupled to the voltage divider 212 and carries an input signal proportional to the voltage across the shunt resister 213. The other input 231 is coupled between a resistor 223 (1.8K) and a capacitor/resistor feedback network 220, 217. As such, the output appearing at terminal 233 is a voltage signal E(i) that is proportional to the instantaneous voltage across the resistor 213. Since the voltage drop across the shunt resistor 213 is directly proportional to the current passing through shunt 213, the output signal E(i) is a measurement of the current through the field winding 142.

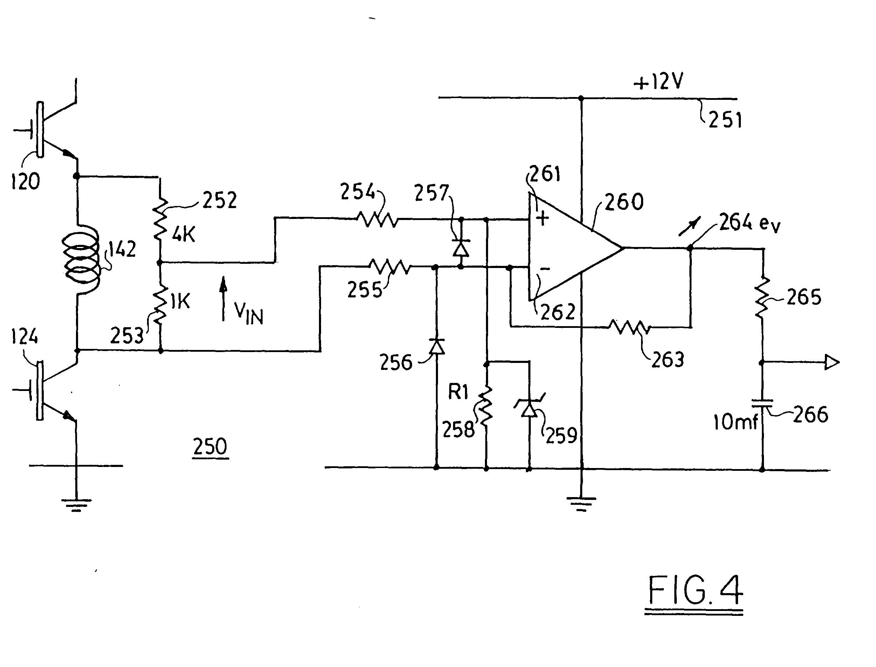

With reference to Figure 4, field voltage monitor 250 detects the voltage across field winding 142 using a resistor network including a 4K resistor 252 and a 1K resistor 253. Accordingly, the voltage drop across the 1K resistor 253 generates a signal V (in). When the field winding 142 is conducting, the voltage across each field terminal is thus applied to the differential amplifier 260. Hence, the voltage across one field terminal is applied to differential amplifier input terminal 261. The voltage from the other field terminal is applied to differential amplifier input 262. Accordingly, the output signal 264 of differential amplifier 260 represents the instantaneous absolute value of the voltage drop across the field 142. Differential amplifier 260 is coupled between a reference voltage 251 and ground. A resistor feedback path 263 is provided between the output terminal 264 and the negative input terminal 262. A resistor zener network 258, 259 is coupled between positive input 261 and ground. A diode 256 is coupled between negative input 262 and ground. Another diode 257 is coupled between the differential inputs 261, 262. For a typical input field voltage of 36 volts, approximately 2.5 volts are dropped across each transistor 120, 124 for a net field voltage of 31 volts. A typical signal V(in) is 31 volts times 0.2 equal to 6.2 volts. The value of resistor 265 is chosen to establish a filtered time constant with capacitor 266. The preferred embodiment, with capacitor 266 has a value of 10 microfarads. The value of resistor R1 is equal to 10.8K.

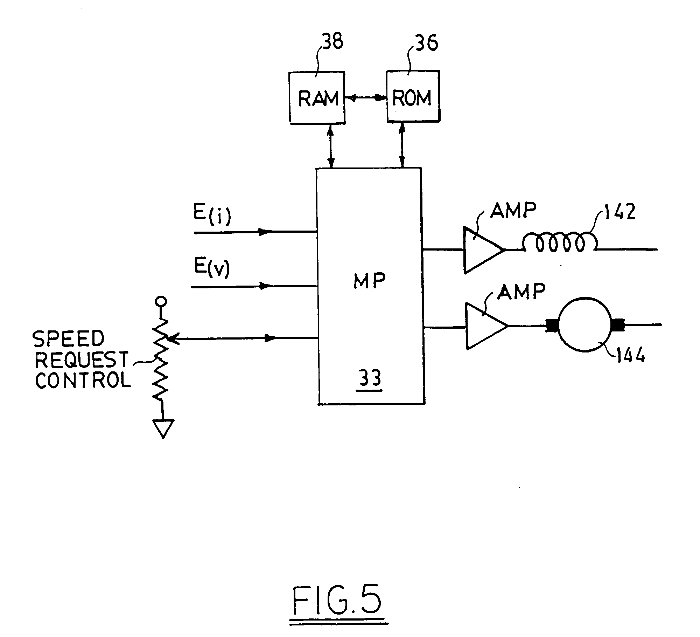

With reference to Figure 5, the outputs E(i) and E(v) are converted into digital signals by an A-to-D converter (not shown) or directly by the motor controller microprocessor 33. Microprocessor 33 is coupled to a memory source 38 that holds data signals corresponding to the resistance temperature coefficient of the windings 142. Memory source 38 provides storage for application programs and for random access storage of data. Memory 36 is a read only memory that holds on operating system program for microprocessor 33. The windings 142 are made of copper and the resistance temperature coefficient is well known. More specifically, the resistance of enamel covered copper wire commonly used in windings 142 is directly proportional to the absolute temperature rise over the range of -234.5°C to +234.5°C. As a result, the relationship can be written that relates the resistance and temperature coefficient of a copper conductor at 2 points as follows:

$$T2 = \frac{R2 \,(234.5^\circ + T1)}{R1} - 234.5^\circ$$

where:

    T(1) = initial conductor temperature (°C)
    T(2)=final conductor temperature (°C)
    R1=initial resistance (Ohms)
    R2=final resistance (Ohms)

The initial temperature is measured at room temperature and stored in the memory 38. The final temperature is calculated by the microprocessor 33 using Ohm's law, R=ΔE ÷ I where R is resistance in ohms, ΔE is the voltage across the field 142, and I is equal to the current in amps in the field. As indicated above, the value for I is derived from the current signal E(i) and the value for ΔE is derived from the voltage signal E(v). Once the temperature of winding 142 is known, the temperature may be output to a display to let the operator know when the temperature is approaching a critical limit. In addition, the microprocessor 33 may use the temperature to modify an operator speed request, slow down the lift truck 1 and let the motor(s) TM cool.

With the above invention, the temperature of the windings 142 of the motor is accurately and instantaneously calculated. The invention does not require that the vehicle be stopped. The invention also does not require that the vehicle be operated at a constant speed. An advantage of the invention is that the temperature is directly measured and is not indirectly measured by separate temperature sensing elements such as thermistors, thermocouples, and bimetallic switches.

Having thus described the preferred embodiment of the invention, those skilled in the art will appreciate that further modifications, additions, changes and other alterations may be made to the preferred embodiment without the parting from the scope of the invention as set forth in the following claims.

## Claims

1.   An apparatus for continuously measuring the temperature of a DC motor in a lift truck, the motor having an armature, an armature winding (144) and a field winding (142), said windings being independently controlled, a motor controller operatively connected to the armature of said motor for applying a continuously varying voltage and a continuously varying current thereto and operatively connected to the field winding for applying a continuously varying voltage and a continuously varying current thereto, the apparatus comprising:

    a memory means (38) providing an initial system temperature and a corresponding initial system resistance;
    a field voltage monitor (250) circuit coupled to the field winding and independent of the applied field voltage for monitoring the instantaneous field voltage and generating a signal representative of the instantaneous field voltage when a voltage is applied to the field winding;
    a field current monitor (210) circuit coupled to the field winding and independent of the applied field current for monitoring the instantaneous field current corresponding to the instantaneous field voltage and generating a signal representative of the instantaneous field current when a current is applied to the field winding, the field voltage and field current monitored simultaneously;

and a microprocessor (33) for mathematically combining the current and voltage signals to generate an instantaneous resistance signal and for mathematically combining the instantaneous resistance signal and the initial system temperature and initial system resistance to provide an instantaneous temperature signal indicative of the field winding temperature; wherein the instantaneous field temperature signal can be any temperature along a continuous spectrum and the apparatus can be used during normal truck operation.

2. The apparatus of claim 1 wherein the field voltage monitor circuit comprises a differential amplifier connected across the field winding for measuring the voltage difference across the field winding.

3. The apparatus of claim 2 further comprising a low pass filter connected to the differential amplifier.

4. The apparatus of claim 1 further comprising a voltage divider with a precision resistor for generating a voltage signal proportional to the instantaneous current.

5. A method for continuously monitoring the temperature of a DC motor of a lift truck with armature (144) and field windings (142), the method comprising the steps of:

   providing an initial system temperature and a corresponding initial system resistance (38); applying a continuously variable voltage and a continuously variable current to the windings; monitoring (250) the instantaneous field voltage independent of the applied field voltage and generating a signal representative of the instantaneous field voltage; monitoring (210) the instantaneous field current independent of the current applied to the field winding, simultaneous with the monitoring of the field voltage, and generating a signal representative of the instantaneous field current, the field voltage and field current monitored simultaneously; mathematically combining (33) the instantaneous field current signal and the instantaneous field voltage signal to provide an instantaneous resistance signal; and mathematically combining (33) the instantaneous resistance signal, the initial system temperature and the initial system resistance to provide an instantaneous field winding temperature signal indicative of the field winding temperature; wherein the instantaneous field temperature signal can be any temperature along a continuous spectrum and the method can be used during normal truck operation.

6. The method of claim 5 wherein the step of monitoring the field voltage comprises differentially amplifying the instantaneous voltage across the field winding.

7. The method of claim 6 further comprising the step of low pass filtering the field voltage.

8. The method of claim 5 further comprising the step of voltage dividing the current from the field winding and monitoring the voltage drop across a precision resistor.

9. The apparatus of claim 1 further comprising means for displaying indicia representative of the instantaneous temperature.

10. The apparatus of claim 1 further comprising means for changing speed of the lift truck in accordance with the temperature signal.

11. The method of claim 5 further comprising the step of displaying indicia representative of the temperature signal.

12. The method of claim 5 further comprising the step of changing the speed of the lift truck in accordance with the temperature signal.

13. The apparatus of claim 1 wherein the microprocessor mathematically combined the instantaneous resistance signal and the initial system temperature and the initial system resistance according to the following equation:

$$T2 = \frac{R2(234.5 + T1)}{R1} - 234.5$$

where T2 is the instantaneous temperature, R1 is the initial system resistance, T1 is the initial system temperature, and R2 is the instantaneous resistance.

14. The method of claim 5 wherein the step of mathematically combining the instantaneous resistance, the initial system resistance and the initial system temperature combines these resistances and temperature according to the following equation:

$$T2 = \frac{R2(234.5 + T1)}{R1} - 234.5$$

where T2 is the instantaneous temperature, R1 is the initial system resistance, T1 is the initial system temperature, and R2 is the instantaneous resistance.

## Patentansprüche

1. Eine Vorrichtung zur kontinuierlichen Messung der Temperatur eines Gleichstrom-Motors in einem Flurförderfahrzeug, wobei der Motor einen Anker, eine Ankerwicklung (144) und eine Feldwicklung (142) aufweist, wobei die Wicklungen unabhängig gesteuert werden, wobei ein Motor-Steuergerät betrieblich mit dem Anker des Motors zum Anlegen einer sich kontinuierlich ändernden Spannung und Zuführen eines sich kontinuierlich ändernden Stromes verbunden ist und betrieblich mit der Feldwicklung zum Anlegen einer sich kontinuierlich ändernden Spannung und Zuführen eines sich kontinuierlich ändernden Stromes verbunden ist, wobei die Vorrichtung umfasst:

   - Speichermittel (38), welche eine Anfangssystemtemperatur und einen korrespondierenden Anfangssystemwiderstand zur Verfügung stellen;
   - eine Feldspannung-Überwachungsschaltung (250), welche an die Feldwicklung gekoppelt und unabhängig von der angelegten Feldspannung ist, zur Überwachung der momentanen Feldspannung und Erzeugung eines Signales, welches charakteristisch für die momentane Feldspannung ist, wenn eine Spannung an die Feldwicklung angelegt ist;
   - eine Feldstrom-Überwachungsschaltung (210), welche an die Feldwicklung gekoppelt und unabhängig von dem zugeführten Feldstrom ist, zur Überwachung des momentanen Feldstromes, welcher der momentanen Feldspannung entspricht, und Erzeugung eines Signales, welches charakteristisch für den momentanen Feldstrom ist, wenn Strom der Feldwicklung zugeführt wird, wobei die Feldspannung und der Feldstrom gleichzeitig überwacht werden; und
   - einem Mikroprozessor (33) zum mathematischen Kombinieren der Strom- und Spannungssignale zur Erzeugung eines momentanen Widerstandssignales und zum mathematischen Kombinieren des momentanen Widerstandssignales und der Anfangssystemtemperatur und dem Anfangssystemwiderstand, um ein momentanes Temperatursignal, welches auf die Feldwicklungstemperatur hinweist, zur Verfügung zu stellen;
   - wobei das momentane Feldtemperatursignal jede Temperatur innerhalb eines kontinuierlichen Spektrums sein kann und die Vorrichtung während des normalen Fahrzeugbetriebes verwendet werden kann.

2. Die Vorrichtung nach Anspruch 1, wobei die Feldspannung-Überwachungsschaltung einen mit der Feldwicklung verschalteten Differenzverstärker zur Messung des Spannungsabfalles an der Feldwicklung enthält.

3. Die Vorrichtung nach Anspruch 2, weiter enthaltend einen Tiefpassfilter, welcher mit dem Differenzverstärker verbunden ist.

4. Die Vorrichtung nach Anspruch 1, weiter enthaltend einen Spannungsteiler mit einem Präzissionswiderstand zur Erzeugung eines Spannungssignales, welches dem momentanen Strom proportional ist.

5. Ein Verfahren zur kontinuierlichen Überwachung der Temperatur eines Gleichspannungs-Motors eines Flurförderfahrzeuges mit Anker- (144) und Feldwicklungen (142), enthaltend die Schritte:

   - zur Verfügung stellen einer Anfangssystemtemperatur und eines entsprechenden Anfangssystemwiderstandes (38);
   - Anlegen einer kontinuierlich veränderbaren Spannung und eines kontinuierlich veränderbaren Stromes an die Wicklungen;
   - Überwachung (250) der momentanen Feldspannung unabhängig von der angelegten Feldspannung und Erzeugung eines Signales, welches charakteristisch für die momentane Feldspannung ist;
   - Überwachung (210) des momentanen Feldstromes unabhängig von dem der Feldwicklung zugeführten Strom und gleichzeitig mit der Überwachung der Feldspannung und Erzeugung eines Signales, welches charakteristisch für den momentanen Feldstrom ist, wobei die Feldspannung und der Feldstrom gleichzeitig überwacht werden;
   - mathematisches Kombinieren (33) des momentanen Feldstromsignales und des momentanen Feldspannungssignales, um ein momentanes Widerstandssignal zur Verfügung zu stellen; und
   - mathematisches Kombinieren (33) des momentanen Widerstandssignales, der Anfangssystemtemperatur und des Anfangssystemwiderstandes, um ein momentanes Feldwicklungstemperatursignal, welches auf die Feldwicklungstemperatur hinweist, zur Verfügung zu stellen;
   - wobei das momentane Feldtemperatursignal jede Temperatur innerhalb eines kontinuierlichen Spektrums sein kann und das Verfahren während des normalen Fahrzeugbetriebes verwendet werden kann.

**6.** Das Verfahren nach Anspruch 5, wobei der Schritt des Überwachens der Feldspannung das differentielle Verstärken der momentanen an der Feldwicklung abfallenden Spannung enthält.

**7.** Das Verfahren nach Anspruch 6, ferner enthaltend den Schritt einer Tiefpassfilterung der Feldspannung.

**8.** Das Verfahren nach Anspruch 5, ferner enthaltend den Schritt der Spannungsteilung des Stromes von der Feldwicklung und des Überwachens des Spannungsabfalles an einem Präzisionswiderstand.

**9.** Die Vorrichtung nach Anspruch 1, weiter enthaltend Mittel zur Anzeige von Hinweisen, welche charakteristisch für die momentane Temperatur sind.

**10.** Die Vorrichtung nach Anspruch 1, weiter enthaltend Mittel zur Änderung der Geschwindigkeit des Flurförderfahrzeuges in Übereinstimmung mit dem Temperatursignal.

**11.** Das Verfahren nach Anspruch 5, ferner enthaltend den Schritt der Anzeige von Hinweisen, welche charakteristisch für das Temperatursignal sind.

**12.** Das Verfahren nach Anspruch 5, ferner enthaltend den Schritt der Änderung der Geschwindigkeit des Flurförderfahrzeuges in Übereinstimmung mit dem Temperatursignal.

**13.** Die Vorrichtung nach Anspruch 1, wobei der Mikroprozessor mathematisch das momentane Widerstandssignal und die Anfangssystemtemperatur und den Anfangssystemwiderstand gemäß der folgenden Gleichung kombiniert:

$$T2 = \frac{R2(234{,}5° + T1)}{R1} - 234{,}5°$$

wobei T2 die momentane Temperatur, R1 der Anfangssystemwiderstand, T1 die Anfangssystemtemperatur und R2 der momentane Widerstand ist.

**14.** Das Verfahren gemäß Anspruch 5, wobei der Schritt des mathematischen Kombinierens des momentanen Widerstandes, des Anfangssystemwiderstandes und der Anfangssystemtemperatur diese Widerstände und die Temperatur gemäß der folgenden Gleichung kombiniert:

$$T2 = \frac{R2(234{,}5° + T1)}{R1} - 234{,}5°$$

wobei T2 die momentane Temperatur, R1 der Anfangssystemwiderstand, T1 die Anfangssystemtemperatur und R2 der momentane Widerstand ist.

## Revendications

**1.** Dispositif pour mesurer de façon continue la température d'un moteur à courant continu dans un chariot élévateur, le moteur possédant une armature, un enroulement induit (144) et un enroulement de champ (142), lesdits enroulements étant commandés indépendamment, un contrôleur de moteur connecté opérativement à l'armature dudit moteur pour y appliquer une tension variant de façon continue et un courant variant de façon continue et connecté opérativement à l'enroulement de champ pour y appliquer une tension variant de façon continue et un courant variant de façon continue, le dispositif comprenant :

un moyen de mémoire (38) fournissant une température initiale de système et une résistance initiale de système correspondante;
un circuit de surveillance de tension de champ (250) couplé à l'enroulement de champ et indépendant de la tension de champ appliquée pour surveiller la tension de champ instantanée et générer un signal représentatif de la tension de champ instantanée lorsqu'une tension est appliquée à l'enroulement de champ;
un circuit de surveillance de courant de champ (210) couplé à l'enroulement de champ et indépendant du courant de champ appliqué pour surveiller le courant de champ instantané correspondant à la tension de champ instantanée et générer un signal représentatif du courant de champ instantané lorsqu'un courant est appliqué à l'enroulement de champ, la tension de champ et le courant de champ étant surveillés simultanément;
et
un microprocesseur (33) pour combiner mathématiquement les signaux de courant et de tension pour générer un signal de résistance instantanée et pour combiner mathématiquement le signal de résistance instantanée et la température initiale du système et la résistance initiale du système pour fournir un signal de température instantanée représentatif de la température de l'enroulement de champ;
dans lequel le signal de température de champ instantanée peut être toute température d'un spectre continu et le dispositif peut être utilisé pendant un fonctionnement normal du chariot.

**2.** Dispositif selon la revendication 1 dans lequel le circuit de surveillance de tension de champ comprend un amplificateur différentiel connecté aux bornes de l'enroulement de champ pour mesurer la différence de tension aux bornes de l'enroulement de champ.

3. Dispositif selon la revendication 2 comprenant en outre un filtre passe bas connecté à l'amplificateur différentiel.

4. Dispositif selon la revendication 1 comprenant en outre un diviseur de tension avec une résistance de précision pour générer un signal de tension proportionnel au courant instantané.

5. Procédé pour la surveillance continue de la température d'un moteur à courant continu d'un chariot élévateur comprenant des enroulements induit (144) et de champ (142), le procédé comprenant les opérations consistant à :

> fournir une température initiale de système et une résistance initiale de système correspondante (38);
> appliquer une tension variant de façon continue et un courant variant de façon continue aux enroulements;
> surveiller (250) la tension de champ instantanée indépendante de la tension de champ appliquée et générer un signal représentatif de la tension de champ instantanée;
> surveiller (210) le courant de champ instantané indépendant du courant appliqué à l'enroulement de champ, en même temps que surveiller la tension de champ, et générer un signal représentatif du courant de champ instantané, la tension de champ et le courant de champ étant surveillés simultanémen
> combiner mathématiquement (33) le signal de courant de champ instantané et le signal de tension de champ instantanée pour fournir un signal de résistance instantanée; et
> combiner mathématiquement (33) le signal de résistance instantanée, la température initiale du système et la résistance initiale du système pour fournir un signal de température d'enroulement de champ instantanée représentatif de la température de l'enroulement de champ;
> dans lequel le signal de température de champ instantanée peut être toute température d'un spectre continu et le procédé peut être utilisée pendant un fonctionnement normal du chariot.

6. Procédé selon la revendication 5 dans lequel l'opération consistant à surveiller la tension de champ comprend l'amplification différentielle de la tension instantanée aux bornes de l'enroulement de champ.

7. Procédé selon la revendication 6 comprenant en outre l'opération de filtrage passe bas de la tension de champ.

8. Procédé selon la revendication 5 comprenant en outre l'opération consistant à diviser la tension du courant provenant de l'enroulement de champ et surveiller la chute de tension aux bornes d'une résistance de précision.

9. Dispositif selon la revendication 1 comprenant en outre un moyen pour afficher des signes représentatifs de la température instantanée.

10. Dispositif selon la revendication 1 comprenant en outre un moyen pour faire varier la vitesse du chariot élévateur selon le signal de température.

11. Procédé selon la revendication 5 comprenant en outre l'opération consistant à afficher des signes représentatifs du signal de température.

12. Procédé selon la revendication 5 comprenant en outre l'opération consistant à faire varier la vitesse du chariot élévateur selon le signal de température.

13. Dispositif selon la revendication 1 dans lequel le microprocesseur a mathématiquement combiné le signal de résistance instantanée et la température initiale du système et la résistance initiale du système selon l'équation suivante:

$$T2 = \frac{R2(234,5 + T1)}{R1} - 234,5$$

dans laquelle T2 est la température instantanée, R1 est la résistance initiale du système, T1 est la température initiale du système, et R2 est la résistance instantanée.

14. Procédé selon la revendication 5 dans lequel l'opération consistant à combiner mathématiquement la résistance instantanée, la résistance initiale du système et la température initiale du système combine ces résistances et température selon l'équation suivante :

$$T2 = \frac{R2(234,5 + T1)}{R1} - 234,5$$

dans laquelle T2 est la température instantanée, R1 est la résistance initiale du système, T1 est la température initiale du système, et R2 est la résistance instantanée.

## FIG.1

FIG.2A

| FIG. 2A | FIG. 2B |

FIG.2

FIG.2B

FIG.3

+12V  251

260

261 +  262 −

264 ev

265

266  10mf

263

257

254  255

256  R1  258

259

252  4K

142

253  1K

$V_{IN}$

120

124

250

FIG.4

FIG.5